# FASCICULE DE BREVET EUROPEEN

(11) **EP 1 977 881 B1**
(45) Date de publication et mention de la délivrance du brevet: **29.12.2010**
(21) Numéro de dépôt: 08154162.5
(22) Date de dépôt: 07.04.2008
(51) Int. Cl.: B29C 69/02, B60R 13/00

(54) **Pièce de carrosserie de véhicule automobile, notamment calandre pour poids lourd**
Karosserieteil eines Kraftfahrzeugs, insbesondere Kühlerhaube für einen Lastwagen
Part of the body of an automobile, in particular a grill for a heavy goods vehicle

(30) Priorité: 05.04.2007 FR 0754330
(43) Date de publication de la demande: 08.10.2008
(73) Titulaire: Inoplast, 07100 Annonay (FR)
(72) Inventeur: Bosg, Patrick, 26240 Saint Barthelemy de Vals (FR); Martin, Laurent, 07340 Peaugres (FR)
(74) Mandataire: de la Bigne, Guillaume Michel Marie

(56) Documents cités:
- EP-A- 0 825 007
- EP-A- 1 153 731
- EP-A- 1 342 545
- EP-A- 1 649 999
- DE-A1- 10 320 331
- JP-A- 8 072 108
- US-A- 4 652 596
- BURKLE E ET AL: "VERBUNDBAUTEILE MIT MEHRPROZESSANLAGEN WIRTSCHAFTLICH HERSTELLEN" KUNSTSTOFFE, CARL HANSER VERLAG, MUNCHEN, DE, vol. 81, no. 3, 1 mars 1991 (1991-03-01), pages 192-198, XP000287480 ISSN: 0023-5563

## Description

La présente invention concerne le domaine des pièces de carrosserie pour véhicule automobile, notamment des calandres pour véhicule de type poids lourd.

On connaît dans l'état de la technique une pièce de carrosserie formant une calandre pour véhicule de type poids lourd réalisée par moulage d'un composé de moulage en feuilles renforcé de fibres (SMC, sigle anglais pour Sheet Moulding Compound). La calandre comprend également, sur une surface destinée à être tournée vers l'extérieur du véhicule, un revêtement injecté lors du moulage de la pièce (IMC, sigle anglais pour In-Mould Coating). Le revêtement, formant une fine couche d'épaisseur sensiblement constante sur la pièce moulée, est choisi habituellement parmi une peinture ou un apprêt destiné à être recouvert d'une peinture. Dans ce dernier cas, la peinture est généralement appliquée sur la pièce après moulage de cette pièce. On notera que la peinture comprend habituellement une laque.

Ce type de pièce est, par exemple, décrit dans l'article: "Verbundbauteile mit Mehrproßanlagen wirtschaftlich herstellen" paru dans le volume 81 du 1 mars 1991 du magazine Kunststoffe aux éditions Carl HANSER VERLAG (München) aux pages 192-198 (ISSN: 0023-5563).

L'aspect d'une telle pièce dépend de la qualité de surface du composé SMC. Plus les fibres du composé sont nombreuses, plus la porosité et la rugosité de la surface destinée à être tournée vers l'extérieur augmentent. En outre, la pièce de carrosserie comprend généralement des nervures. Or, ces nervures ont tendance à former des retassures si leurs dimensions ne sont pas convenablement choisies. La couche de peinture ou d'apprêt, qui est relativement fine du fait de sa composition relativement fluide, ne permet pas d'atténuer les défauts de surface du composé et révèle plutôt ces défauts.

L'invention a pour but de proposer une pièce de carrosserie de véhicule automobile, notamment une calandre de véhicule de type poids lourd, ayant un aspect satisfaisant relativement peu lié à la qualité de surface du composé.

A cet effet, l'invention a pour objet une pièce de carrosserie de véhicule automobile, **caractérisée en ce qu**'elle comprend :
- une première couche formant au moins une nervure sur une première surface de la pièce, destinée à être tournée vers l'intérieur du véhicule, la première couche étant réalisée en un composé de moulage renforcé de fibres, et
- une deuxième couche venue de moulage avec la première couche, formant une deuxième surface de la pièce, destinée à être tournée vers l'extérieur du véhicule, la deuxième couche étant réalisée en un matériau comprenant au moins 5%, de préférence au moins 8%, de résine thermodurcissable et au moins 50%, de préférence au moins 65%, de charges minérales.

Ci-dessus et dans ce qui suit, les proportions pour cent correspondent à des proportions pondérales.

Une pièce de carrosserie selon l'invention comprend donc deux couches ayant essentiellement deux fonctions distinctes. La première couche a une fonction structurelle et garantit la tenue mécanique de la pièce tandis que la deuxième couche a une fonction de nivellement et permet d'améliorer la qualité de surface de la pièce.

On constate que les propriétés de la deuxième couche, notamment sa viscosité relativement élevée, permettent d'atténuer efficacement les défauts de la surface formée par la première couche en comblant les creux formés à la surface de la première couche, notamment lors du retrait de celle-ci. La viscosité relativement élevée de la deuxième couche est assurée notamment par les charges minérales, ayant une fonction épaississante.

Il est à noter que les charges minérales, par exemple à base de craie, ne subissent pas de retrait lors du refroidissement de la deuxième couche. Le fait que le matériau de la deuxième couche comprenne une grande proportion de charges permet donc d'améliorer l'état de surface de la pièce.

La proportion de résine thermodurcissable de la deuxième couche permet d'appliquer celle-ci par moulage sur la première couche.

Ainsi, du fait de la présence de cette deuxième couche apte à améliorer l'état de la surface de la pièce destinée à être tournée vers l'extérieur, la conception de la pièce est plus libre. La composition du matériau de la première couche peut en effet être déterminée au plus juste pour s'adapter aux exigences technico-économiques du cahier des charges de la pièce. Par exemple, le taux ou la nature des fibres dans le composé peut être choisi sans se soucier des propriétés d'aspect de ce matériau. Par ailleurs, les retassures engendrées par la forme des nervures peuvent être plus importantes que d'habitude. L'épaisseur des nervures peut donc être optimisée sans détériorer l'aspect de la pièce et les propriétés mécaniques de la pièce peuvent par conséquent être améliorées.

En outre, les parties structurelles et d'aspect de la pièce de carrosserie étant venues de moulage, il n'est pas nécessaire d'avoir recours à un moule supplémentaire et les coûts de fabrication de cette pièce restent limités.

La pièce de carrosserie peut également comprendre l'une ou plusieurs des caractéristiques de la liste suivante :
- le composé de la première couche est choisi parmi un composé de moulage en feuilles (SMC), ou un composé de moulage préimprégné, tel que l'AMC (Advanced Moulding Compound),
- le matériau de la deuxième couche est dépourvu de fibres de renfort, ce qui permet de diminuer les porosités sur la deuxième surface et d'obtenir une meilleure qualité de surface,
- le matériau de la deuxième couche comprend un pourcentage inférieur à 15% de résine thermodurcissable. De ce fait, on limite la proportion du matériau subissant un retrait et on améliore encore la qualité de surface de la pièce,
- le matériau de la deuxième couche comprend un pourcentage non nul inférieur à 10%, de préférence compris entre 1 de 8%, de fibres de renfort. Le fait que le matériau de la deuxième couche comprenne des fibres de renfort permet de faciliter le procédé d'injection de la deuxième couche en utilisant un outillage standard habituellement conçu pour l'injection de pâtes fibreuses. En outre, l'introduction de fibres dans le matériau de la deuxième couche garantit à cette couche une meilleure résistance vis-à-vis des tests de type petit choc (qui consiste à simuler un choc à une vitesse inférieure à 8 km/h) ou gravillonnage (qui consiste à jeter sur la pièce une quantité prédéterminée de grenaille dans des conditions prédéterminées sur la pièce). La faible teneur en fibres du matériau permet toutefois d'obtenir qualité de surface très acceptable,
- le composé de moulage de la première couche comprend au moins 10%, de préférence au moins 20%, de fibres de renfort. La configuration de la pièce de carrosserie selon l'invention permet en effet d'utiliser pour la première couche un matériau plus renforcé de fibres que les matériaux habituellement utilisés pour ce type de pièce, la teneur en fibres de ce matériau ne détériorant pas l'aspect extérieur de la pièce du fait de la présence de la deuxième couche. Ainsi, on peut encore améliorer les propriétés mécaniques de la pièce,
- la deuxième surface est recouverte d'un revêtement choisi parmi une peinture ou un apprêt destiné à être recouvert de peinture, permettant d'améliorer encore l'aspect de la pièce,
- le revêtement est un composé injecté lors du moulage de la pièce (IMC). Le procédé de fabrication de la pièce de carrosserie permet ainsi d'appliquer le revêtement dès le moulage et d'éviter la mise en oeuvre d'étapes supplémentaires, de sorte que les coûts de fabrication restent limités,
- l'épaisseur de la première couche correspond à au moins 60% de l'épaisseur totale de la pièce,
- la pièce de carrosserie forme une calandre pour véhicule de type poids lourd.

L'invention a également pour objet un procédé de fabrication d'une pièce de carrosserie selon l'une quelconque des revendications précédentes, **caractérisé en ce qu**'il comprend :
- une étape de moulage du composé renforcé de fibres pour former la première couche,
- lorsque la première couche est au moins partiellement polymérisée, une étape d'injection du matériau comprenant au moins 5%, de préférence au moins 8%, de résine thermodurcissable et au moins 50%, de préférence au moins 65%, de charges minérales, pour former la deuxième couche.

Le procédé comprend également une étape optionnelle d'injection du revêtement sur la deuxième couche lorsque celle-ci est au moins partiellement polymérisée.

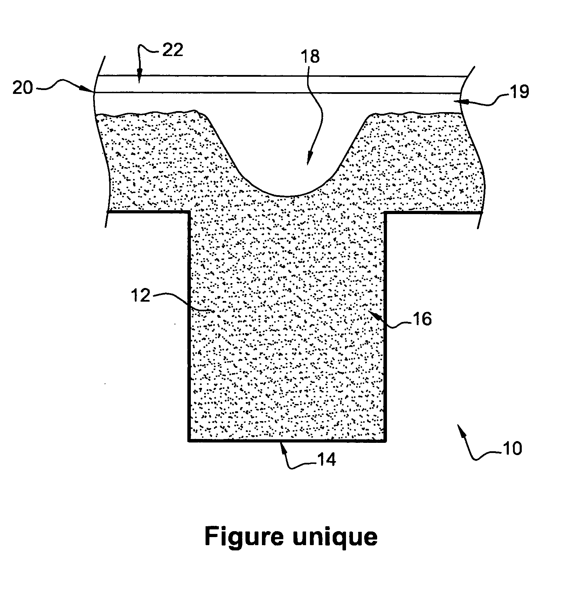

L'invention sera mieux comprise à la lecture de la description qui va suivre, donnée uniquement à titre d'exemple et faite en se référant à la figure unique représentant un détail en coupe d'une pièce de carrosserie selon l'invention.

On a représenté sur la figure les différentes couches d'une pièce de carrosserie 10 selon l'invention. Cette pièce de carrosserie 10 est, dans l'exemple décrit, une calandre pour véhicule de type poids lourd.

La pièce de carrosserie 10 comprend une première couche 12 réalisée par moulage d'un composé de moulage en feuilles renforcé de fibres (SMC).

Ce composé comprend en général une résine thermodurcissable, notamment un résine polyester et des fibres de renfort, par exemple des fibres de verre. Le composé comprend également des charges minérales et différents additifs, permettant entres autres de faciliter le démoulage de la pièce. La composition du composé est choisie de façon à optimiser ses propriétés mécaniques plutôt que ses propriétés d'aspect. Le composé comprend en effet au moins 10%, de préférence au moins 20%, de fibres de renfort. L'homme du métier saura adapter la composition exacte du composé de moulage en feuilles en fonction de son cahier des charges.

La première couche 12 forme, sur une première surface 14 de la pièce destinée à être tournée vers l'intérieur du véhicule, au moins une nervure 16 permettant d'augmenter la rigidité et la tenue mécanique de la pièce. La présence de cette nervure 16 provoque, en raison du retrait du composé, une retassure 18 pouvant contribuer à dégrader la qualité de la surface.

La première couche 12 constitue la partie structurelle de la pièce 10, qui confère à celle-ci ses propriétés mécaniques. Son épaisseur correspond au moins à 60% de l'épaisseur totale de la pièce.

La pièce de carrosserie 10 comprend également une deuxième couche 19 venue de moulage avec la première couche 12, cette deuxième couche 19 formant une deuxième surface 20 de la pièce destinée à être tournée vers l'extérieur du véhicule. Cette couche 19 est réalisée en un matériau comprenant au moins 5%, de préférence au moins 8% (plus particulièrement entre 8 et 15%) de résine thermodurcissable, notamment de résine polyester, et au moins 50%, de préférence au moins 65% (plus particulièrement entre 65 et 80%) de charges minérales, notamment de craie. Le matériau de la deuxième couche comprend également un pourcentage non nul inférieur à 10%, de préférence compris entre 1 et 8% de fibres de renfort, telles que des fibres de verre, cette teneur relativement faible permettant de limiter la porosité de la deuxième surface. Il comprend également entre 5 et 15% d'additifs thermoplastiques et entre 1 à 3% d'autres additifs classiques.

Cette deuxième couche 19 permet de remplir les creux formés par les défauts de surface de la première couche 12, comme les retassures 18 ou les pores présentes sur cette première couche 12.

La pièce de carrosserie 10 comprend également un revêtement 22 recouvrant la deuxième surface 20. Ce revêtement est choisi parmi une peinture ou un apprêt destiné à être recouvert de peinture.

On va maintenant décrire le procédé de fabrication de la pièce de carrosserie selon l'invention. Ce procédé comprend une première étape lors de laquelle des feuilles de composé de moulage en feuilles (SMC) sont placées dans un moule.

Le procédé comprend ensuite une étape de moulage par compression lors de laquelle les feuilles de composé de moulage en feuilles sont compressées contre la paroi du moule destinée à former la surface de la pièce de carrosserie tournée vers l'intérieur du véhicule. Le composé se liquéfie alors et la matière prend la forme du moule pour former la première couche 12 de la pièce de carrosserie.

Le procédé comprend ensuite une étape de cuisson lors de laquelle la compression est pilotée selon une séquence déterminée de façon que le composé de la première couche 12 polymérise partiellement.

Le procédé comprend ensuite une étape d'injection dans le moule du matériau comprenant au moins 5% de résine polyester et au moins 50% de charges minérales. Ce matériau est surmoulé sur la première couche 12 et s'insère dans les espaces formés par les irrégularités de surface de la première couche 12. Le matériau surmoulé sur la première couche forme la deuxième couche de la pièce de carrosserie.

Cette étape d'injection est suivie d'une étape de cuisson de la pièce, durant laquelle la deuxième couche 19 polymérise partiellement. La composition visqueuse de ce matériau et l'effet épaississant des charges minérales implique que la deuxième couche 19 subit très peu de retrait lors de cette étape.

Le procédé comprend ensuite une étape d'injection du revêtement 22 sur la deuxième couche. Ce revêtement (IMC) est fluide et est injecté de façon à former une couche très fine entre la deuxième couche 19 et une paroi du moule formant la surface de la pièce de carrosserie destinée à être tournée vers l'extérieur. Cette étape est suivie d'une étape de cuisson de la pièce de carrosserie et d'une étape de démoulage de celle-ci.

On notera que l'invention n'est pas limitée au mode de réalisation décrit précédemment. En variante, la pièce de carrosserie peut ne pas former une calandre pour véhicule de type poids lourd. En outre, le revêtement injecté dans le moule (IMC) est optionnel. En effet, le procédé peut comprendre une étape supplémentaire d'application de peinture, et éventuellement d'apprêt (précédant l'application de la peinture), sur la pièce à sa sortie du moule.

De plus, le composé de la première couche peut être un composé de moulage préimprégné, tel que l'AMC (Advanced Moulding Compound), auquel cas l'étape de moulage de ce composé est une étape de moulage par injection. Le composé de la deuxième couche peut être dépourvu de fibres de renfort.

## Revendications

1. Pièce de carrosserie (10) de véhicule automobile, comprenant:
- une première couche (12) formant au moins une nervure (16) sur une première surface (14) de la pièce (10), destinée à être tournée vers l'intérieur du véhicule, la première couche (12) étant réalisée en un composé de moulage renforcé de fibres,
- une deuxième couche (19) venue de moulage avec la première couche (12), formant une deuxième surface (20) de la pièce destinée à être tournée vers l'extérieur du véhicule et **caractérisée en ce qu'**elle est réalisée en un matériau comprenant au moins 5%, de préférence au moins 8%, de résine thermodurcissable et au moins 50%, de préférence au moins 65%, de charges minérales; ces pourcentages représentant des pourcentages en poids de matériau.

2. Pièce de carrosserie (10) selon la revendication précédente, **caractérisée en ce que** le composé de la première couche est choisi parmi :
- un composé de moulage en feuilles (SMC), ou
- un composé de moulage préimprégné, tel que l'AMC (Advanced Moulding Compound).

3. Pièce de carrosserie (10) selon l'une quelconque des revendications précédentes, **caractérisée en ce que** le matériau de la deuxième couche est dépourvu de fibres de renfort.

4. Pièce de carrosserie (10) selon l'une quelconque des revendications 1 et 2, **caractérisée en ce que** le matériau de la deuxième couche (19) comprend un pourcentage non nul et inférieur à 10%, de préférence compris entre 1 et 8%, de fibres de renfort.

5. Pièce de carrosserie (10) selon l'une quelconque des revendications précédentes, **caractérisé en ce que** le composé de moulage de la première couche comprend au moins 10%, de préférence au moins 20%, de fibres de renfort.

6. Pièce de carrosserie (10) selon l'une quelconque des revendications précédentes, **caractérisée en ce que** la deuxième surface (20) est recouverte d'un revêtement (22) choisi parmi une peinture et un apprêt destiné à être recouvert de peinture.

7. Pièce de carrosserie (10) selon la revendication précédente, **caractérisée en ce que** le revêtement (22) est un composé injecté lors du moulage de la pièce (IMC).

8. Pièce de carrosserie (10) selon l'une quelconque des revendications précédentes, **caractérisée en ce que** l'épaisseur de la première couche (12) correspond à au moins 60% de l'épaisseur totale de la pièce.

9. Pièce de carrosserie (10) selon l'une quelconque des revendications précédentes, **caractérisée en ce qu'**elle forme une calandre pour véhicule de type poids lourd.

10. Procédé de fabrication d'une pièce de carrosserie (10) selon l'une quelconque des revendications précédentes, **caractérisé en ce qu'**il comprend :
- une étape de moulage du composé renforcé de fibres pour former la première couche (12),
- lorsque la première couche (12) est au moins partiellement polymérisée, une étape d'injection du matériau comprenant au moins 5%, de préférence au moins 8%, de résine polyester et au moins 50%, de préférence au moins 65%, de charges minérales pour former la deuxième couche (19), ces pourcentages représentant des pourcentages en poids de matériaux.

11. Procédé selon la revendication précédente pour la fabrication d'une pièce de carrosserie selon la revendication 6, **caractérisé en ce qu'**il comprend, lorsque la deuxième couche (19) est au moins partiellement polymérisée, une étape d'injection du revêtement (22) sur la deuxième couche.

## Claims

1. A piece of bodywork (10) for a motor vehicle, the piece of bodywork comprising:
· a first layer (12) forming at least one rib (16) on a first surface (14) of the piece (10) that is to be turned towards the inside of the vehicle, the first layer (12) being made of a fiber-reinforced molding compound; and
· a second layer (19) integrally molded with the first layer (12), forming a second surface (20) of the piece that is to face towards the outside of the vehicle and **characterized in that** it is made of a material comprising at least 5%, preferably at least 8% thermosetting resin and at least 50%, preferably at least 65% of mineral fillers; these percentages being percentages by weight of material.

2. A piece of bodywork (10) according to the preceding claim, **characterized in that** the compound of the first layer is selected from:
· a sheet molding compound (SMC); or
· a preimpregnated molding compound such as advanced molding compound (AMC).

3. A piece of bodywork (10) according to either preceding claim, **characterized in that** the material of the second layer does not have reinforcing fibers.

4. A piece of bodywork (10) according to claim 1 or claim 2, **characterized in that** the material of the second layer (19) includes a non-zero percentage less than 10% preferably lying in the range 1% to 8% of reinforcing fibers.

5. A piece of bodywork (10) according to any preceding claim, **characterized in that** the molding compound of the first layer includes at least 10% and preferably at least 20% of reinforcing fibers.

6. A piece of bodywork (10) according to any preceding claim, **characterized in that** the second surface (20) is covered in a coating (22) selected from a paint and a primer for covering in paint.

7. A piece of bodywork (10) according to the preceding claim, **characterized in that** the coating (22) is an injection-molding compound (IMC) injected while molding the piece.

8. A piece of bodywork (10) according to any preceding claim, **characterized in that** the thickness of the first layer (12) corresponds to at least 60% of the total thickness of the piece.

9. A piece of bodywork (10) according to any preceding claim, **characterized in that** it forms a front grill for a heavy goods type vehicle.

10. A method of fabricating a piece of bodywork (10) according to any preceding claim, the method being **characterized in that** it comprises:
· a step of molding the fiber-reinforced compound to form the first layer (12); and
· once the first layer (12) is at least partially polymerized, a step of injecting the material comprising at least 5%, preferably at least 8% of polyester resin and at least 50%, preferably at least 65% of mineral fillers to form the second layer (19), these percentages being percentages by weight of material.

11. A method according to the preceding claim for fabricating a piece of bodywork according to claim 6, **characterized in that** it comprises, once the second layer (19) is at least partially polymerized, a step of injecting the coating (22) on the second layer.

## Patentansprüche

1. Karosserieteil (10) eines Kraftfahrzeugs, umfassend:
- eine erste Schicht (12), die zumindest eine Rippe (16) auf einer ersten Fläche (14) des Teils (10) bildet, die dazu bestimmt ist, zum Inneren des Fahrzeugs gedreht zu werden, wobei die erste Schicht (12) aus einer faserverstärkten Formmasse hergestellt ist,
- eine an die erste Schicht (12) angeformte zweite Schicht (19), die eine zweite Fläche (20) des Teils bildet, die dazu bestimmt ist, zum Äußeren des Fahrzeugs gedreht zu werden, und **dadurch gekennzeichnet ist, dass** sie aus einem Material hergestellt ist, das mindestens 5%, vorzugsweise mindestens 8%, wärmehärtendes Harz und mindestens 50%, vorzugsweise mindestens 65%, mineralische Füllstoffe umfasst; wobei diese Prozentangaben Gewichtsprozent bedeuten.

2. Karosserieteil (10) nach dem vorstehenden Anspruch, **dadurch gekennzeichnet, dass** die Masse der ersten Schicht gewählt ist aus:
- einer flächigen Formmasse (SMC), oder
- einer vorimprägnierten Formmasse, wie etwa AMC (Advanced Moulding Compound).

3. Karosserieteil (10) nach einem der vorstehenden Ansprüche, **dadurch gekennzeichnet, dass** das Material der zweiten Schicht frei von Verstärkungsfasern ist.

4. Karosserieteil (10) nach einem der Ansprüche 1 und 2, **dadurch gekennzeichnet, dass** das Material der zweiten Schicht (19) einen Verstärkungsfaseranteil ungleich null und unter 10%, vorzugsweise zwischen 1 % und 8%, umfasst.

5. Karosserieteil (10) nach einem der vorstehenden Ansprüche, **dadurch gekennzeichnet, dass** die Formmasse der ersten Schicht mindestens 10%, vorzugsweise mindestens 20%, Verstärkungsfasern umfasst.

6. Karosserieteil (10) nach einem der vorstehenden Ansprüche, **dadurch gekennzeichnet, dass** die zweite Fläche (20) von einem Überzug (22) bedeckt ist, der aus einer Farbe und einer Grundierung zur Beschichtung mit Farbe ausgewählt ist.

7. Karosserieteil (10) nach dem vorstehenden Anspruch, **dadurch gekennzeichnet, dass** der Überzug (22) eine während der Formung des Teils eingespritzte Masse ist (IMC).

8. Karosserieteil (10) nach einem der vorstehenden Ansprüche, **dadurch gekennzeichnet, dass** die Dicke der ersten Schicht (12) mindestens 60% der Gesamtdicke des Teils entspricht.

9. Karosserieteil (10) nach einem der vorstehenden Ansprüche, **dadurch gekennzeichnet, dass** es eine Kühlerhaube für einen Lastwagen bildet.

10. Verfahren zur Herstellung eines Karosserieteils (10) nach einem der vorstehenden Ansprüche, **dadurch gekennzeichnet, dass** es umfasst:
- einen Schritt zur Formung der faserverstärkten Masse, um die erste Schicht (12) zu bilden,
- wenn die erste Schicht (12) wenigstens teilweise polymerisiert ist, einen Schritt zur Einspritzung des Materials, das mindestens 5%, vorzugsweise mindestens 8%, Polyesterharz und mindestens 50%, vorzugsweise mindestens 65%, mineralische Füllstoffe umfasst, um die zweite Schicht (19) zu bilden, wobei diese Prozentangaben Gewichtsprozent bedeuten.

11. Verfahren nach dem vorstehenden Anspruch zur Herstellung eines Karosserieteils nach Anspruch 6, **dadurch gekennzeichnet, dass** es, wenn die zweite Schicht (19) wenigstens teilweise polymerisiert ist, einen Schritt zur Einspritzung des Überzugs (22) auf die zweite Schicht umfasst.
